# EUROPÄISCHE PATENTANMELDUNG

(11) **EP 4 249 948 A1**
(43) Veröffentlichungstag der Anmeldung: **27.09.2023**
(21) Anmeldenummer: 22164400.8
(22) Anmeldetag: 25.03.2022
(51) Int. Cl.: G01S 7/4865, G01S 7/48, G01S 7/481, G01S 7/4861, G01S 17/42

(54) **ERFASSUNG UND ABSTANDSBESTIMMUNG EINES OBJEKTS**

(71) Anmelder: SICK AG, 79183 Waldkirch (DE)
(72) Erfinder: Kerp, Michael, 79183 Waldkirch (DE); Marra, Martin, 79280 Au (DE); Menzel, Simon, 79194 Gundelfingen (DE); Buser, Roger, 79106 Freiburg (DE)

(57) **Zusammenfassung**

Es wird ein entfernungsmessender optoelektronischer Sensor (10) zur Erfassung und Abstandsbestimmung eines Objekts (16) in einem Überwachungsbereich (14) angegeben, der einen Lichtsender (12) zum Aussenden eines Sendesignals (34), einen Lichtempfänger (18) mit mindestens einem Lichtempfangselement (20) zum Erzeugen eines Empfangssignals sowie eine Steuer- und Auswerteeinheit (22) aufweist, die dafür ausgebildet ist, aus dem Empfangssignal eine Lichtlaufzeit (60) und damit den Abstand des Objekts (16) zu bestimmen. Dabei weist die Steuer- und Auswertungseinheit (22) einen ersten Auswertungskanal (54) für das Empfangssignal zur Bestimmung der Lichtlaufzeit (60) und mindestens einen zweiten Auswertungskanal (56) für das Empfangssignal zur Bestimmung einer Signalverlaufsinformation (62) auf.

## Beschreibung

Die Erfindung betrifft einen entfernungsmessenden optoelektronischen Sensor und ein Verfahren zur Erfassung und Abstandsbestimmung eines Objekts in einem Überwachungsbereich nach dem Oberbegriff von Anspruch 1 beziehungsweise 14.

Für eine optische Entfernungsbestimmung wird oftmals die Laufzeit eines Lichtsignals gemessen, die über die Lichtgeschwindigkeit der Entfernung entspricht. Nach dem Tastprinzip wird ein Lichtstrahl in den Überwachungsbereich ausgesandt und der von Objekten zurückgeworfene Lichtstrahl wieder empfangen, um dann das Empfangssignal elektronisch auszuwerten. Um den Messbereich zu erweitern, kann der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. Eine andere Möglichkeit zur Messbereichserweiterung besteht darin, zugleich mehrere Messpunkte mit mehreren Abtaststrahlen zu erfassen. Das lässt sich auch mit einem Laserscanner kombinieren, der dann nicht nur eine Überwachungsebene erfasst, sondern über eine Vielzahl von Überwachungsebenen einen dreidimensionalen Raumbereich. In den meisten Laserscannern wird die Abtastbewegung durch einen Drehspiegel erreicht. Gerade bei Verwendung mehrerer Abtaststrahlen ist aber im Stand der Technik auch bekannt, stattdessen den gesamten Messkopf mit Lichtsendern und Lichtempfängern rotieren zu lassen. Ein Mehrlagenscanner wird beispielsweise in EP 3 518 000 A1 beschrieben.

Um aus dem zu erfassenden Empfangslicht ein elektrisches Signal zu erzeuge, genügt die Nachweisempfindlichkeit einfacher Photodioden in vielen Anwendungsfällen nicht. In einer Lawinenphotodiode (APD, Avalanche Photo Diode) löst das einfallende Licht einen kontrollierten Lawinendurchbruch (Avalanche Effect) aus. So werden die von einfallenden Photonen erzeugten Ladungsträger vervielfacht, und es entsteht ein Photostrom, der zu der Lichtempfangsintensität proportional, dabei aber wesentlich größer ist als bei einer einfachen PIN-Diode. Im sogenannten Geiger-Modus ist die Lawinenphotodiode oberhalb der Durchbruchspannung vorgespannt, so dass bereits ein einziger, durch ein einzelnes Photon freigesetzter Ladungsträger eine Lawine auslösen kann, die dann aufgrund der hohen Feldstärke sämtliche verfügbaren Ladungsträger rekrutiert. Die Lawinenphotodiode zählt somit wie der namensgebende Geigerzähler Einzelereignisse. Lawinenphotodioden im Geiger-Modus werden auch als SPAD (Single-Photon Avalanche Diode) bezeichnet.

Geiger-APDS oder SPADs sind also sehr schnelle, hochempfindliche Photodioden auf Halbleiterbasis. Ein Nachteil der hohen Empfindlichkeit ist, dass nicht nur ein Nutzlichtphoton, sondern auch ein schwaches Störereignis durch Fremdlicht, optisches Übersprechen oder Dunkelrauschen den Lawinendurchbruch auslösen kann. Dieses Störereignis trägt dann mit dem gleichen relativ starken Signal zum Messergebnis bei wie das empfangene Nutzlicht und ist davon auch aus dem Signal heraus nicht unterscheidbar. Anschließend bleibt die Lawinenphotodiode für eine Totzeit von ca. 5 bis 100 ns unempfindlich und fällt so lange für weitere Messungen aus. Deshalb ist es üblich, mehrere SPADs zusammenzuschalten und statistisch auszuwerten. Eine Bezeichnung für einen Lichtempfänger mit mehreren zusammengeschalteten SPADs bei Ausgabe eines Summensignals ist SiPM (Silicon Photo Multiplier), wobei Silizium nur der gängige, nicht aber einzige zugrundeliegende Halbleiter ist.

Durch eine Lichtlaufzeitmessung mit kurzen Pulsen ist eine sehr hohe Auflösung und Messgenauigkeit erreichbar. Durch Auslösen der SPAD-Zellen beispielsweise in einem SiPM entsteht als Ausgangssignal eine schnelle Flanke, die üblicherweise für die Distanzmessung genutzt wird. Sofern eine entsprechende hochfrequenztaugliche Empfangselektronik vorhanden ist, können die Empfangspulse präzise in der Zeit lokalisiert werden.

Ein SPAD-basierter Lichtempfänger deckt einen hohen Dynamikbereich ab. Hat eine Zelle einmal ausgelöst, so trägt sie ihren Lawinenstrom bei und geht dann in die Totzeit über. Etwas vereinfachend ausgedrückt reagieren bereits ab einer gewissen Remission eines angetasteten Objekts in einem gewissen Abstand nahezu alle Zellen mit ihrem Lawinenstrom, so dass ein noch stärkeres Lichtsignal beispielsweise von einem Reflektor beziehungsweise einem näheren Objekt kaum noch zusätzlichen Zellen rekrutieren kann. Daraus ergibt sich eine inhärente Dynamikkompression.

Diese Dynamikkompression ist einerseits erwünscht, weil sie das Übersteuern nachfolgender Stufen und damit eine Verzerrung des Empfangssignals verhindert. Allerdings geht dadurch auch Information über die Signalform und Signalstärke des einfallenden Lichts verloren. Die Amplitude des elektronischen Empfangssignals entspricht nur sehr eingeschränkt der Intensität des Lichts, nämlich in einem Bereich schwächerer Signale, bei denen noch ausreichend freie Zellen zur Verfügung stehen. Deshalb lässt sich auf diesem Weg beispielsweise ein Reflektor nicht von einem weißen Ziel unterscheiden. Außerdem ist ohne Kenntnis der Signalstärke natürlich auch nicht möglich, hieraus Korrekturgrößen für die gemessene Lichtlaufzeit abzuleiten.

Es gibt noch zwei weitere Effekte, die eine Anzahl jeweils noch für die Erfassung zur Verfügung stehender Zellen begrenzen und die den Verlauf des Empfangssignals beeinflussen. Das ist zum einen auf den Lichtempfänger fallendes Fremdlicht, das bereits einen durchaus nennenswerten Anteil der Zellen rekrutieren kann. Zum anderen neigen SPAD-basierte Lichtempfänger, insbesondere im Infrarotbereich empfindliche SiPMs, zu einem sogenannten Nachpulsen. In diesem Wellenlängenbereich wird eine tief im Material befindliche Driftzone benötigt, in der die Lebensdauer der Ladungsträger mitunter länger ist als die Totzeit der SPAD-Zellen. Nach dem Wiederaufladen können insbesondere nach starken Empfangspulsen noch verbleibende Ladungsträger die Zelle sofort erneut auslösen, ohne dass überhaupt Licht einfällt. Das Nachpulsen wird im Stand der Technik als Störeffekt betrachtet und möglichst gering gehalten, wie etwa in der DE 10 2017 118 307 A1 oder der KR 101 381 392 B1. In der EP3441 787A1 wird der Nachpuls wie sonstiges Rauschen behandelt und soll durch mehrere SPAD-Pixel ausgemittelt werden.

Es ist bekannt, zusätzlich zu einer Lichtlaufzeit weitere Größen wie eine Pulsbreite oder Intensität zu messen, um so die Lichtlaufzeit nochmals zu korrigieren. Beispielsweise wird in Laserscannern die Pulsbreite als Zeitintervall zwischen Übersteigen und Unterschreiten einer Schwelle bestimmt. In der EP 1 972 961 A2 wird in einem Pulsmittelungsverfahren aus mehreren Einzelpulsen ein Histogramm aufgebaut und darin ein Maximum oder ein Integral als Maß für die Intensität bestimmt. Die EP 3 059 608 A1 bestimmt den Empfangspegel eines Laserscanners in der Versorgung des Lichtempfängers. Alle diese Ansätze sind aber nicht für SPAD-basierte Lichtempfänger oder SiPMs geeignet, denn sie werten die Amplitude des Empfangssignals aus, die aber wie erläutert aufgrund der Dynamikkompression den Signalverlauf nicht treu genug abbildet.

Es ist daher Aufgabe der Erfindung, eine Lichtlaufzeitmessung weiter zu verbessern.

Diese Aufgabe wird durch einen entfernungsmessenden optoelektronischen Sensor und ein Verfahren zur Erfassung und Abstandsbestimmung eines Objekts in einem Überwachungsbereich nach Anspruch 1 beziehungsweise 14 gelöst. Der Sensor weist einen Lichtsender, einen Lichtempfänger mit mindestens einem Lichtempfangselement sowie eine Steuer- und Auswertungseinheit auf, um ein Lichtsignal auszusenden, wieder zu empfangen und durch Auswertung des Empfangssignals die Lichtlaufzeit und damit den Abstand zu einem Objekt zu messen. Das ausgesandte Lichtsignal ist vorzugsweise ein Puls. Das mindestens eine Lichtempfangselement, vorzugsweise eine Vielzahl von Lichtempfangselementen oder Zellen, kann prinzipiell eine APD oder ein sonstiger Lichtdetektor sein. Bevorzugt handelt es sich um ein im Geigermodus betriebenes Lichtempfangselement, also einen SPAD-basierten Lichtempfänger. Insbesondere werden die Photoströme mehrerer solcher Lichtempfangselemente schon früh in der Verarbeitungskette miteinander kombiniert. Ein Beispiel ist eine Umsetzung als Siliziumphotomultiplier (SiPM), der ein quasi-analoges Bauteil darstellt.

Die Erfindung geht von dem Grundgedanken aus, das Empfangssignal einer mehrkanaligen Auswertungsstruktur zuzuführen, um eine für das jeweilige Auswertungsziel eines Auswertungskanals optimierten Vorverarbeitung zu ermöglichen. Ein erster Auswertungskanal bestimmt die Lichtlaufzeit. Hier ist das Auswertungsziel eine hochgenaue Bestimmung des Empfangszeitpunkts, denn daraus ergibt sich zusammen mit einer Information über den Sendezeitpunkt die Lichtlaufzeit. Ein zweiter Auswertungskanal bestimmt eine Signalverlaufsinformation. Darunter wird eine Intensitäts- oder Forminformation des Empfangssignals verstanden, vorzugsweise in Form eines einzigen Werts oder Skalars, wobei auch komplexere Signalverlaufsinformationen denkbar sind. Beispiele für die Signalverlaufsinformation sind ein Pegel oder RSSI (Received Signal Strength Indication), eine Pulsform oder eine Pulsbreite. In weiteren Ausführungsformen sind mehr als zwei Auswertungskanäle vorgesehen.

Die Erfindung hat den Vorteil, dass zusätzlich zu einer zeitlichen Lokalisierung des Empfangssignals auch eine Aussage über den Signalverlauf ermöglicht wird. Charakteristische Größen wie Pegel, Pulsform oder Pulsbreite werden trotz einer Dynamikkompression insbesondere SPAD-basierter Lichtempfänger erfassbar, und dies auch bei Sättigungs- oder Nachpulseffekten. Die Signalverlaufsinformation wiederum ist je nach Ausführungsform für sich als weitere Messgröße neben dem Abstand von Interesse und/oder wird intern verwendet. Es können damit Korrekturen oder Anpassungen der Laufzeitbestimmung des ersten Auswertungskanals vorgenommen und so eine verbesserte Messgenauigkeit erreicht werden. Die Signalverlaufsinformation erlaubt ferner eine Bestimmung der Beschaffenheit beziehungsweise des Remissionsvermögens der angetasteten Objekte und damit insbesondere eine Unterscheidung von weißen Zielen und Reflektoren. Der Sensor behält dabei eine Mehrechofähigkeit, d.h. die separate Messbarkeit für hintereinander liegende Objekte im Falle von Teiltransparenz, etwa wenn ein Objekt hinter einer Glasscheibe angeordnet ist, oder bei Kantentreffern, wo jeweils ein Teil des Sendelichtquerschnitts auf hintereinander liegende Objekte fällt.

Die Steuer- und Auswertungseinheit ist bevorzugt dafür ausgebildet, die Lichtlaufzeit mittels der Signalverlaufsinformation zu korrigieren. Objekte unterschiedlichen Remissionsvermögens werden scheinbar in unterschiedlichen Entfernungen gemessen. Diese Farb- oder Schwarzweißverschiebung kann durch eine entsprechende Korrektur kompensiert werden. Das ist erfindungsgemäß möglich, weil die entsprechende Pegel- oder Intensitätsinformation mit der Signalverlaufsinformation bestimmbar wird. Die erforderlichen Korrekturwerte werden beispielsweise mit einem Graukeilabgleich eingelernt.

Die Steuer- und Auswertungseinheit ist bevorzugt dafür ausgebildet, für die Bestimmung der Lichtlaufzeit in dem Empfangssignal die zeitliche Lage einer Flanke oder eines Maximums zu ermitteln, insbesondere einen Schwerpunkt des Maximums, und anhand der Signalverlaufsinformation zu entscheiden, ob die Lichtlaufzeit aus der Flanke oder dem Maximum bestimmt wird. Die Flanke, insbesondere die erste steigende Flanke zu Beginn eines Empfangspulses, lässt sich sehr präzise in der Zeit lokalisieren, wenn der Empfangspuls sich hinreichend aus dem Rauschen erhebt. Alternativ wird das Maximum lokalisiert, wobei hier Maximum den Signalverlauf um einen Maximalwert herum bezeichnet ("Peak"). Ein einzelner Maximalwert ist nur eine Möglichkeit, das Maximum zu charakterisieren, und es ist in der Regel nicht die aussagekräftigste und robusteste. Deutlich rauschtoleranter ist die Bestimmung eines Schwerpunkts, beispielsweise desjenigen Teiles des Maximums oder Empfangspulses, der sich über eine Schwelle erhebt.

Es gibt weitere Möglichkeiten, das Maximum zu lokalisieren, beispielsweise mittels Parabelfit oder als Mittenlage oder sonstige feste Lage zwischen dem Über- und anschließenden Unterschreiten einer Schwelle. In einer besonders bevorzugten Ausführungsform wird je nach Signalverlaufsinformation zwischen einer Flanken- und Schwerpunktsauswertung umgeschaltet. Ob das Signal-Rausch-Verhältnis gut genug für eine Flankenauswertung ist, wird beispielsweise anhand einer Schwelle an eine Pulsbreite oder eine Pegelinformation entschieden. So wird jeweils ein optimaler Algorithmus zur Lichtlaufzeitbestimmung verwendet.

Die Steuer- und Auswertungseinheit ist bevorzugt dafür ausgebildet, anhand der Signalverlaufsinformation festzustellen, ob das Objekt ein Reflektor ist. Dazu kann eine Schwelle an eine Pegelinformation, Pulsbreite oder sonstige Signalverlaufsinformation angelegt werden. Der Sensor erhält auf diese Weise eine Reflektorerkennung. Die entsprechende Information kann als zusätzliches Messergebnis ausgegeben werden, insbesondere mit nur einem Bit als Flag für einen erkannten Reflektor. In einigen Anwendungen, beispielsweise in der Navigation, werden damit Reflektoren als besondere, künstliche Ziele oder Landmarken identifiziert. Es ist auch denkbar, die Lichtlaufzeitbestimmung anzupassen, wenn ein Reflektor oder ein anderes Objekt angetastet ist. Etwas weiter als eine Reflektorerkennung gefasst können helle und dunkle Ziele und Reflektoren in feineren Stufen anhand der unterschiedlichen Signalverlaufsinformation differenziert werden.

Der erste Auswertungskanal weist bevorzugt ein erstes Hochpassfilter einer ersten Grenzfrequenz auf. Das erste Hochpassfilter soll dafür sorgen, dass ein für die Lichtlaufzeitmessung in der Zeit zu lokalisierender Puls erhalten bleibt oder sogar noch besser herausgearbeitet wird. Die erste Grenzfrequenz wird daher unter Berücksichtigung der kurzen Pulse gewählt. Effektiv leistet das Hochpassfilter eine Differenzierung, um mit Einsetzen der Lawine bei Lichtempfang eine scharfe Flanke zu erhalten. Die langsameren Signalanteile sind für eine präzise Zeitmessung zunächst nicht von Interesse.

Der erste Auswertungskanal weist bevorzugt ein erstes Bandpassfilter auf. Damit wird ein Empfangspuls weiter geformt, es wird eine Schwingung angestoßen. Die Grenzfrequenzen des ersten Bandpassfilters werden so optimiert, dass eine hohe Messgenauigkeit mit einer Mehrechofähigkeit vereinbart wird. Dazu sollte eine von dem Bandpassfilter angestoßene Schwingung schnell abklingen, damit ein nächstes Ziel unterscheidbar bleibt, ohne dass Empfangspulse ineinanderlaufen, während zugleich der Ruhepegel möglichst wenig verschoben wird. Dieses Optimierungsziel lässt sich durch höhere Ordnungen des ersten Bandpassfilters noch besser erreichen.

Der erste Auswertungskanal weist bevorzugt einen ersten Komparator zur Digitalisierung des Empfangssignals auf, insbesondere mit einer anpassbaren ersten Komparatorschwelle. Das in dem ersten Auswertungskanal vorverarbeitete Empfangssignal wird so für die weitere Verarbeitung digitalisiert. Eine besonders einfache Möglichkeit hierzu ist eine Binarisierung mit einer Vielzahl von Messwiederholungen und Sammeln der jeweiligen binarisierten Empfangssignale in einem Histogramm, so wie dies in der einleitend genannten EP 1 972 961 A2 beschrieben ist. Die Komparatorschwelle kann statisch und/oder dynamisch angepasst werden. Statische Anpassung bedeutet vorzugsweise eine geeignete Kalibrierung für den Sensor und/oder die jeweilige Anwendungssituation. Eine dynamische Anpassung reagiert vorzugsweise auf den jeweiligen momentanen Rauschpegel insbesondere aufgrund von Fremdlicht. Statt nur eines ersten Komparators können mehrere Komparatoren im ersten Auswertungskanal eingesetzt sein, um das Empfangssignal mit mehreren Schwellen feiner abgestuft zu digitalisieren. Diese Schwellen könnten ebenfalls angepasst werden, wobei das aber bei hinreichender Bittiefe der Digitalisierung nicht unbedingt erforderlich ist.

Der zweite Auswertungskanal weist bevorzugt ein zweites Hochpassfilter einer zweiten Grenzfrequenz auf, wobei insbesondere die zweite Grenzfrequenz kleiner ist als die erste Grenzfrequenz. Auch zum Gewinnen der Signalverlaufsinformation sind die hochfrequenten Anteile von Interesse, denn es soll der Signalverlauf im Bereich des Empfangspulses untersucht werden. Allerdings ist vorzugsweise die zweite Grenzfrequenz kleiner als die erste Grenzfrequenz, so dass im Ergebnis im zweiten Auswertungskanal breitere Empfangspulse ausgewertet werden als im ersten Auswertungskanal. Das ermöglicht eine verbesserte Bestimmung der Signalverlaufsinformation, insbesondere von Pegel oder Pulsbreite. Durch den verbreiterten Empfangspuls wäre zugleich die Lokalisierung des Empfangspulses in der Zeit erschwert, beispielsweise wäre ein Schwerpunkt zusätzlich verfälscht, und die Mehrechofähigkeit wäre eingeschränkt, weil breitere Pulse leichter ineinanderlaufen. Die zeitliche Lokalisierung ist aber nicht Aufgabe des zweiten Auswertungskanal, sondern des ersten Auswertungskanal, und darin zeigt sich erneut der Vorteil zweier Auswertungskanäle, die jeweils für ihr eigenes Auswertungsziel optimiert sind, hier zunächst hinsichtlich der ersten und zweiten Grenzfrequenz.

Der zweite Auswertungskanal weist bevorzugt ein zweites Bandpassfilter auf. Es hat ähnliche Aufgaben zur Pulsformung wie das erste Bandpassfilter im ersten Auswertungskanal. Allerdings sind die Grenzfrequenzen wiederum unabhängig wählbar und optimierbar. Im zweiten Auswertungskanal kann eine gewisse zeitliche Verzerrung oder Verschiebung hingenommen werden. Es geht hier eher darum, den Signalverlauf möglichst repräsentativ zu erfassen.

Der zweite Auswertungskanal weist bevorzugt einen zweiten Komparator zur Digitalisierung des Empfangssignals auf, insbesondere mit einer anpassbaren zweiten Komparatorschwelle. Mit dem zweiten Komparator wird das in dem zweiten Auswertungskanal vorverarbeitete Empfangssignal für die weitere Verarbeitung digitalisiert. In einer bevorzugten Ausführungsform wird durch Binarisierung und Messwiederholungen analog dem Vorgehen mit dem ersten Komparator in dem ersten Auswertungskanal ein zweites Histogramm aufgezeichnet. Wie schon im ersten Auswertungskanal kann anstelle einer Binarisierung eine mehrwertige Digitalisierung vorgesehen sein. Die zweite Komparatorschwelle kann unabhängig von der ersten Komparatorschwelle eingestellt werden, um eine möglichst aussagekräftige Signalverlaufsinformation zu gewinnen. Auch eine dynamische Schwellenanpassung ist denkbar.

Die Steuer- und Auswertungseinheit weist bevorzugt einen dritten Auswertungskanal mit einem Tiefpassfilter einer dritten Grenzfrequenz auf, wobei der dritte Auswertungskanal dafür ausgebildet ist, einen Fremdlichtanteil des Empfangssignals zu bestimmen. Mit dem Tiefpassfilter wird das eigene Nutzlicht mit seinen kurzen Pulsen herausgefiltert, so dass nur ein Fremdlichtanteil verbleibt. Dabei wird unter Fremdlicht bevorzugt Gleichlicht oder nur langsam veränderliches Umgebungslicht verstanden. Der Fremdlichtanteil kann wie schon die Signalverlaufsinformation eine weitere Messgröße sein, die zusätzlich ausgegeben wird. Das kann in der nachgelagerten Auswertung nützlich sein, oder als Betriebsanzeige, denn beispielsweise ist bei hoher Fremdlichtbelastung die Reichweite des Sensors reduziert. Alternativ oder zusätzlich wird der Fremdlichtanteil intern als Hilfsgröße genutzt.

Die Steuer- und Auswertungseinheit ist bevorzugt dafür ausgebildet, mittels des Fremdlichtanteils die Signalverlaufsinformation und/oder die Lichtlaufzeit zu korrigieren. Dies sind Anwendungsbeispiele der Nutzung des Fremdanteils als interne Hilfsgröße. Durch das Fremdlicht wird ein gewisser Teil der verfügbaren Lichtempfangselemente oder Zellen schon unabhängig von der Messung ausgelöst. Dies kann zu einer Flankenverschiebung führen, und ein entsprechender Laufzeitfehler lässt sich anhand des Fremdlichtanteils korrigieren. Bei hoher Fremdlichtbelastung kann es auch passieren, dass eine Strombegrenzung des Lichtempfängers einschreitet, und deren künstliche Veränderungen des Empfangssignals können in Kenntnis des Fremdlichtanteils ebenfalls kompensiert werden.

Der Sensor ist bevorzugt als Laserscanner ausgebildet, insbesondere als Mehrlagenscanner, und weist eine bewegliche Ablenkeinheit auf, mit deren Hilfe die Sendesignale periodisch durch den Überwachungsbereich geführt werden. Die Ablenkeinheit ist in beliebiger Weise beispielsweise als Drehspiegel, jedoch vorzugsweise in Form einer drehbaren Abtasteinheit ausgebildet, die praktisch einen beweglichen Messkopf bildet, in dem der Lichtsender und/oder der Lichtempfänger und bevorzugt auch zumindest Teile der Steuer- und Auswertungseinheit untergebracht sind. Ein Mehrebenen- oder Mehrlagenscanner tastet mit der Bewegung der beweglichen Ablenkeinheit den Überwachungsbereich in mehreren Ebenen ab.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine vereinfachte Blockdarstellung eines optoelektronischen Sensors zur Lichtlaufzeitmessung;
- Fig. 2: eine Schnittdarstellung eines als Laserscanner ausgebildeten optoelektronischen Sensors;
- Fig. 3: eine vereinfachte Übersichtsdarstellung einer mehrkanaligen Auswertungsstruktur für einen optoelektronischen Sensor zur Lichtlaufzeitmessung;
- Fig. 4: eine detailliertere Darstellung eines ersten Auswertungskanals zur Lichtlaufzeitmessung;
- Fig. 5: eine detailliertere Darstellung eines zweiten Auswertungskanals zu Bestimmung des Signalverlaufs; und
- Fig. 6: eine detailliertere Darstellung eines dritten Auswertungskanals zur Fremdlichtbestimmung.

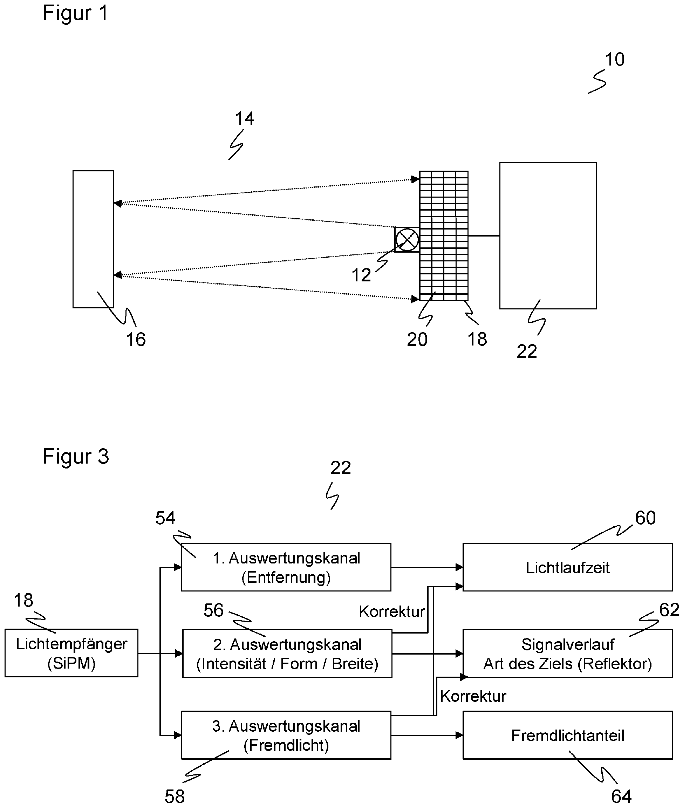

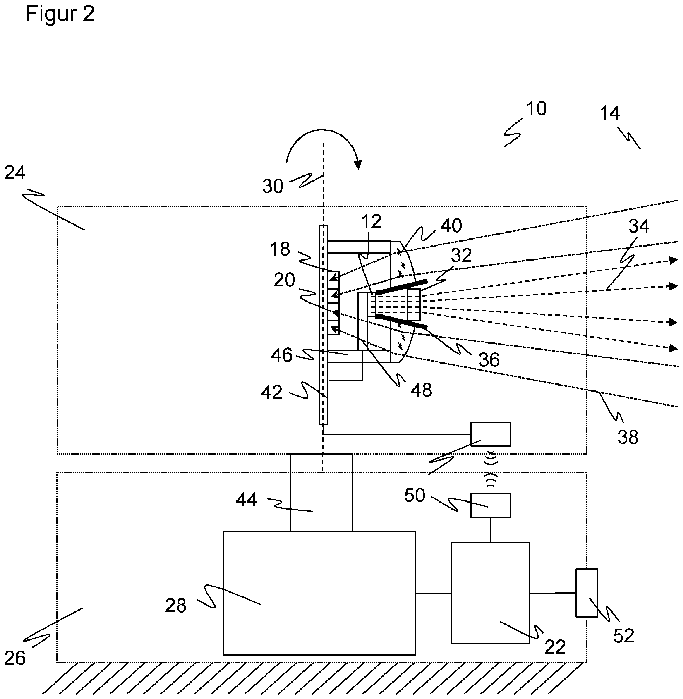

Figur 1 zeigt eine sehr vereinfachte schematische Blockdarstellung eines optoelektronischen Sensors 10 in einer Ausführungsform als einstrahliger Lichttaster. Die Ausführungsform als Lichttaster ist rein beispielhaft. Eine weitere Ausführungsform als Laserscanner wird später noch unter Bezugnahme auf die Figur 2 erläutert. Als weitere Alternative können mehrere Sensoren 10 miteinander verbunden werden, um ein tastendes Lichtgitter mit mehreren, meist parallelen Strahlen zu bilden, welches in jedem Strahl Entfernungen misst oder überwacht. Diese Aufzählung optoelektronischer Sensoren, in denen die Erfindung eingesetzt werden kann, ist nicht abschließend. Auch mobile Systeme sind denkbar, bei denen der Sensor 10 beweglich montiert ist.

Ein Lichtsender 12, beispielsweise eine LED oder eine Laserlichtquelle, sendet ein Lichtsignal, vorzugsweise einen Lichtpuls, in einen Überwachungsbereich 14 aus. Trifft es dort auf ein Objekt 16, so wird ein Teil des Lichtsignals remittiert oder reflektiert und kehrt zu einem Lichtempfänger 18 zurück. Dieser Lichtempfänger 18 weist in dieser Ausführungsform eine Vielzahl von Lichtempfangselementen auf, die als Lawinenphotodiodenelemente 20 im Geigermodus oder SPADs ausgebildet sind. Bevorzugt handelt es sich um einen SiPM (Silicon Photomultiplier). Die Lawinenphotodiodenelemente 20 sind beispielsweise zu einer Matrix, einer Linie oder auch in einem anderen Muster oder irregulär angeordnet. In anderen Ausführungsformen weist der Lichtempfänger 18 keine SPADs auf, sondern andere Lichtempfangselemente wie eine APD, oder es handelt sich um einen Einzelempfänger mit nur einem Lichtempfangselement.

Die Empfangssignale der Lawinenphotodiodenelemente 20 werden von einer Steuer- und Auswertungseinheit 22 ausgelesen und dort ausgewertet. Dazu können die Empfangssignale zu einem Summensignal zusammengefasst werden. Um den Abstand des Objekts 16 zu messen, bestimmt die Steuer- und Auswertungseinheit 22 eine Lichtlaufzeit von Aussenden eines Lichtsignals bis zu dessen Empfang und rechnet dies über die Lichtgeschwindigkeit in einen Abstand um. Als zusätzliche Messgrößen und/oder interne Hilfsgrößen werden ein Signalverlauf und/oder ein Fremdlichtanteil bestimmt. Eine dafür geeignete mehrkanalige Auswertungsstruktur wird später unter Bezugnahme auf die Figuren 3 bis 6 näher erläutert. Umgekehrt kann die Steuer- und Auswertungseinheit 22 auf Lichtsender 12 und/oder Lichtempfänger 18 einwirken, etwa um das Lichtsignal zu formen und auszulösen oder dessen Eigenschaften festzulegen, oder um Eigenschaften des Lichtempfängers 18 einzustellen.

Die Auftrennung in Lichtempfänger 18 und Steuer- und Auswertungseinheit 22 in Figur 1 ist so auch in der Praxis denkbar, dient aber in erster Linie der Erläuterung. Alternativ werden diese Elemente zumindest teilweise auf einem gemeinsamen Chip integriert, dessen Fläche sich lichtempfindliche Bereiche der Lawinenphotodiodenelemente 20 und einzelnen oder Gruppen von Lawinenphotodiodenelementen 20 zugeordnete Schaltkreise zu deren Auswertung und Ansteuerung teilen. Auch die optische Anordnung mit einem Lichtsender 12, der einen kleinen Anteil des Lichtempfängers 18 verdeckt, ist rein beispielhaft. Alternativ sind andere bekannte optische Lösungen einsetzbar, wie Autokollimation etwa mit einem Strahlteiler und einer gemeinsamen Optik, oder Pupillenteilung, wo zwei getrennte Optiken vorgesehen sind und Lichtsender und Lichtempfänger nebeneinander angeordnet werden.

Figur 2 zeigt eine schematische Schnittdarstellung durch einen optoelektronischen Sensor 10 in einer Ausführungsform als Laserscanner. Dabei sind gleiche oder einander entsprechende Merkmale mit den schon zu Figur 1 eingeführten Bezugszeichen versehen, und nur abweichende Eigenschaften werden noch beschrieben. Der Sensor 10 umfasst in grober Aufteilung eine bewegliche Abtasteinheit 24 und eine Sockeleinheit 26. Die Abtasteinheit 24 ist der optische Messkopf, während in der Sockeleinheit 26 weitere Elemente wie eine Versorgung, Auswertungselektronik, Anschlüsse und dergleichen untergebracht sind. Im Betrieb wird mit Hilfe eines Antriebs 28 der Sockeleinheit 26 die Abtasteinheit 24 in eine Drehbewegung um eine Drehachse 30 versetzt, um so den Überwachungsbereich 14 periodisch abzutasten.

In der Abtasteinheit 24 sind Lichtsender 12 und Lichtempfänger 18 untergebracht. Der Lichtsender 12 weist hier beispielsweise eine LED oder einen Laser in Form eines Kantenemitters oder VCSELs auf und sendet mit Hilfe einer dargestellten Sendeoptik 32 mehrere Sendelichtstrahlen 34 mit gegenseitigem Winkelversatz in den Überwachungsbereich 14 aus. Die Erzeugung der mehreren Sendelichtstrahlen 34 ist beispielsweise über eine Vielzahl von Lichtquellen und/oder durch optische Elemente wie Strahlteiler, Lichtleiter oder diffraktive Elemente möglich. Zur Vermeidung von Streulicht innerhalb des Sensors 10 kann der interne Lichtweg der Sendelichtstrahlen 34 von einem lichtundurchlässigen Tubus 36 abgeschirmt werden.

Treffen die Sendelichtstrahlen 34 in dem Überwachungsbereich 14 auf ein Objekt, so kehren entsprechende remittierte Lichtstrahlen 38 zu dem Sensor 10 zurück. Die remittierten Lichtstrahlen 38 werden von einer Empfangsoptik 40 auf den Lichtempfänger 18 geführt. Der Lichtempfänger 18 weist mehrere Gruppen von SPADs (Single-Photon Avalanche Diode) beziehungsweise mehrere SiPMs (Silicon Photomultiplier) auf, um die mehreren remittierten Lichtstrahlen 38 zu erfassen. Dabei ist vorzugsweise der Empfangspfad mit der Gestaltung der Empfangsoptik 40 sowie der Anordnung und Ausrichtung von Lichtempfänger 18 und Empfangsoptik 40 so ausgelegt, dass jeweils ein remittierter Lichtstrahl 38 auf eine bestimmte Gruppe von SPADs beziehungsweise ein SiPM fällt. Wechselwirkungen sind aber in der Regel insbesondere nicht für alle Abstände von Objekten zu vermeiden. Das kann ein Grund dafür sein, die remittierten Lichtstrahlen 38 vorzugsweise getrennt in einem Multiplexbetrieb zu empfangen.

Der Lichtempfänger 18 ist in dieser Ausführungsform auf einer Leiterkarte 42 angeordnet, die auf der Drehachse 30 liegt und mit der Welle 44 des Antriebs 28 verbunden ist. Die Empfangsoptik 40 stützt sich durch Beinchen 46 auf der Leiterkarte 42 ab und hält eine weitere Leiterkarte 48 des Lichtsenders 12. Die beiden Leiterkarten 42, 48 sind untereinander verbunden und können auch als gemeinsame Flexprint-Leiterkarte ausgebildet sein.

Der in Figur 2 gezeigte optische Aufbau mit zwei übereinander geschichteten Leiterkarten 42, 48 oder Leiterkartenbereichen und einer zentral innerhalb der Empfangsoptik 40 angeordneten gemeinsamen Sendeoptik 32 ist rein beispielhaft zu verstehen. So wäre alternativ jede andere an sich beispielsweise von eindimensionalen optoelektronischen Sensoren oder Laserscannern bekannte Anordnung wie etwa eine biaxiale Anordnung beziehungsweise Doppelaugenanordnung oder die Verwendung eines Umlenk- oder Strahlteilerspiegels möglich. Weiterhin ist denkbar, Lichtsender 12 und Lichtempfänger 18 auf einer gemeinsamen Leiterkarte zu montieren, bei gegenüber Figur 2 veränderter Anordnung auch auf einer gemeinsamen Leiterkarte, die in nur einer Ebene liegt.

Eine berührungslose Versorgungs- und Datenschnittstelle 50 verbindet die bewegliche Abtasteinheit 24 mit der ruhenden Sockeleinheit 26. Dort befindet sich die Steuer- und Auswertungseinheit 22, die zumindest teilweise auch auf der Leiterkarte 42 oder an anderem Ort in der Abtasteinheit 24 untergebracht sein kann. Zusätzlich zu Steuer- und Auswertungsfunktionen analog zu denjenigen, die zu der Ausführungsform gemäß Figur 1 schon beschrieben wurden, wird davon der Antrieb 28 gesteuert und das Signal einer nicht gezeigten, von Laserscannern allgemein bekannten Winkelmesseinheit erfasst, die die jeweilige Winkelstellung der Abtasteinheit 24 bestimmt.

Aus den mittels Lichtlaufzeitverfahren bestimmten Abständen zu einem jeweiligen angetasteten Objekt und der Information über die Winkelstellung von der Winkelmesseinheit stehen nach jeder Scanperiode mit Winkel und Entfernung zweidimensionale Polarkoordinaten aller Objektpunkte in einer Abtastebene zur Verfügung. Die jeweilige Abtastebene ist über die Identität des jeweiligen remittierten Lichtstrahls 38 und dessen Erfassungsort auf dem Lichtempfänger 18 ebenfalls bekannt, so dass insgesamt ein dreidimensionaler Raumbereich abgetastet wird. Damit sind die Objektpositionen beziehungsweise Objektkonturen bekannt und können über eine Sensorschnittstelle 52 ausgegeben werden. Die Sensorschnittstelle 52 oder ein weiterer, nicht gezeigter Anschluss dienen umgekehrt als Parametrierschnittstelle.

Der Sensor 10 kann auch als Sicherheitssensor für einen Einsatz in der Sicherheitstechnik zur Überwachung einer Gefahrenquelle ausgebildet sein, wie sie beispielsweise eine gefährliche Maschine darstellt. Dabei wird ein Schutzfeld überwacht, das während des Betriebs der Maschine vom Bedienpersonal nicht betreten werden darf. Erkennt der Sensor 10 einen unzulässigen Schutzfeldeingriff, etwa ein Bein einer Bedienperson, so löst er einen Nothalt der Maschine aus. In der Sicherheitstechnik eingesetzte Sensoren 10 müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Insbesondere kann dann die Sensorschnittstelle 52 als sichere Ausgabeschnittstelle (OSSD, Output Signal Switching Device) ausgebildet sein, um bei einem Schutzfeldeingriff durch ein Objekt ein sicherheitsgerichtetes Abschaltsignal auszugeben.

Der dargestellte Sensor 10 ist ein Laserscanner mit rotierendem Messkopf, nämlich der Abtasteinheit 24. Alternativ ist auch eine periodische Ablenkung mittels Drehspiegel denkbar. Bei mehreren Sendelichtstrahlen 34 hat das aber den Nachteil, dass es von der jeweiligen Drehstellung abhängt, wie die mehreren Sendelichtstrahlen 34 in den Überwachungsbereich 14 fallen, denn deren Anordnung rotiert durch den Drehspiegel, wie bekannte geometrische Überlegungen ergeben. Eine weitere alternative Ausführungsform schwenkt die Abtasteinheit 24 hin und her, entweder anstelle der Drehbewegung oder zusätzlich um eine zweite Achse senkrecht zur Drehbewegung, um auch in Elevation eine Abtastbewegung zu erzeugen. Auch eine Ausgestaltung als Solid-State-Lidar ist möglich.

Figur 3 zeigt eine vereinfachte Übersichtsdarstellung einer mehrkanaligen Auswertungsstruktur der Steuer- und Auswertungseinheit 22. Das Empfangssignal des Lichtempfängers 18 wird drei Auswertungskanälen 54, 56, 58 zugeführt, wobei der dritte Auswertungskanal 58 zunächst optional ist. Die Auswertungskanäle können 54, 56, 58 im hinteren Teil wieder wenigstens teilweise gemeinsam ausgebildet sein, insbesondere um füreinander Korrekturwerte zu liefern. Das Empfangssignal kann ein Summensignal zusammengeführter Lawinenphotodiodenelemente 20 beziehungsweise eines SiPM sein. Die jeweilige Gruppe von Lawinenphotodiodenelementen 20, die zu dem Empfangssignal beiträgt, kann vorzugsweise im Betrieb ausgewählt oder umgeschaltet werden.

Auf der rechten Seite der Figur 3 sind die jeweiligen Ausgabegrößen 60, 62, 64 der Auswertungskanäle 54, 56, 58 dargestellt. Der erste Auswertungskanal 54 ist ein schneller, sehr hochfrequenter Kanal, mit dem eine präzise Bestimmung der Lichtlaufzeit 60 und damit die eigentliche Entfernungsmessung erfolgt. Der zweite Auswertungskanal 56 ist ein schneller Kanal mit großer Bandbreite, der einen Signalverlauf 62 bestimmt, etwa eine Bestimmung einer Pulsbreite, eines Pulsverlaufs oder eines Pegels beziehungsweise RSSIs. Der Signalverlauf 62 kann eine weitere externe Ausgabegröße sein, wie die Lichtlaufzeit 60 beziehungsweise der daraus bestimmte Abstand. Außerdem kann der Signalverlauf 62 dazu dienen, die Bestimmung der Lichtlaufzeit 60 zu verbessern oder zu korrigieren. Der dritte Auswertungskanal 58 ist ein Messkanal für einen Gleichlicht- oder Fremdlichtanteil 64. Der Fremdlichtanteil 64 kann eine weitere externe Ausgabegröße sein. Außerdem kann der Fremdlichtanteil genutzt werden, um die Bestimmung der Lichtlaufzeit 60 oder des Signalverlaufs 62 zu verbessern.

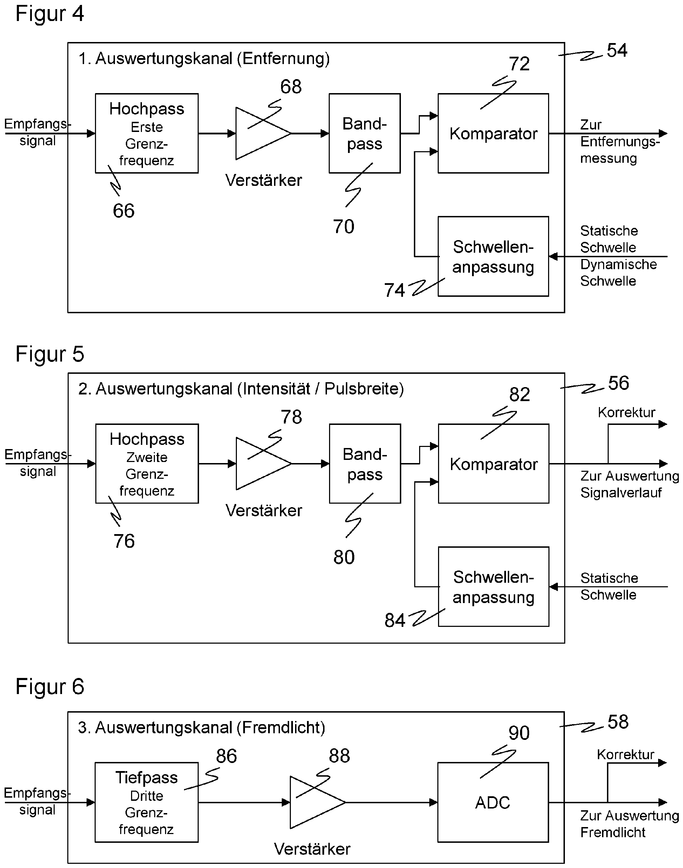

Figur 4 zeigt eine detaillierte Darstellung einer beispielhaften Ausführungsform des ersten Auswertungskanals 54 zur Entfernungsmessung. Die gezeigten einzelnen Elemente des ersten Auswertungskanals 54 ebenso wie der noch zu beschreibenden weiteren Auswertungskanäle 56, 58 sind besonders vorteilhaft, es kann aber in anderen Ausführungsformen nur eine Teilauswahl vorhanden sein.

Das Empfangssignal wird einem ersten Hochpassfilter 66 einer ersten Grenzfrequenz zugeführt. Es ist auf die kurzen Pulse abgestimmt, die der Lichtlaufzeitmessung zugrunde liegen. Das erste Hochpassfilter 66 bewirkt praktisch eine Differenzierung des Empfangssignals, die den kurzen Puls der weiteren Auswertung und präzisen zeitlichen Lokalisierung noch besser zugänglich macht. Anschließend erfolgt, sofern erforderlich, eine Impedanzanpassung und Pegelanhebung oder bei Bedarf auch Pegelabschwächung in einem optionalen ersten Verstärker 68.

Ein erstes Bandpassfilter 70 dient der weiteren Pulsformung. Dazu sind die Grenzfrequenzen optimiert zwischen den beiden Anforderungen eines möglichst geringen Messfehlers und einer guten Mehrechofähigkeit. Das Empfangssignal soll also in seiner zeitlichen Charakteristik möglichst unverfälscht bleiben und zugleich rasch ausschwingen, damit keine Pulse ineinanderlaufen und somit verschiedene hintereinander angeordnete Objekte getrennt werden können. Unter Umständen ist es sinnvoll, das erste Bandpassfilter 70 durch höhere Ordnungen weiter zu optimieren.

Ein erster Komparator 72 vergleicht das jeweilige gefilterte Empfangssignal mit einer ersten Komparatorschwelle, das dadurch binarisiert und im Anschluss digital weiterverarbeitet wird. Vorzugsweise wird aus den binarisierten Werten in Messwiederholungen mit mehreren ausgesandten Lichtsignalen ein Histogramm aufgebaut, entsprechend dem einleitend genannten Pulsmittelungsverfahren der EP 1 972 961 A2. Alternativ zu dem ersten Komparator 72 kann ein AD-Wandler mit größerer Bittiefe eingesetzt sein.

Eine optionale erste Schwellenanpassung 74 setzt die erste Komparatorschwelle. Sie sollte zumindest einmalig oder statisch angepasst sein, um allgemein die Empfindlichkeit des ersten Auswertungskanals 54 festzulegen, und wird vorzugsweise dynamisch beispielsweise in Abhängigkeit von einem Abstand eines angetasteten Objekts 16 oder einem aktuellen Fremdlichteinfall nachgeführt.

Am Ausgang des ersten Auswertungskanals 54 steht nun ein binarisiertes Signal zum Sammeln eines Histogramms oder ein digitalisiertes Signal für die weitere Auswertung und Lichtlaufzeitmessung zur Verfügung. Der Empfangspuls ist darin zeitlich präzise erhalten und herausgearbeitet, so dass ein Empfangszeitpunkt beispielsweise aus der ersten steigenden Flanke bestimmt werden kann. Alternative Verfahren zum Lokalisieren des Empfangspulses sind eine Schwerpunktbestimmung desjenigen Anteils eines Peaks, der sich über eine weitere Schwelle erhebt, ein Parabel- oder sonstiger Funktionsfit oder die Bestimmung eines Nulldurchgangs eines von den Filtern 66, 70 verursachten Überschwingers. Zusammen mit einer Information über den Sendezeitpunkt wird aus dem Empfangszeitpunkt die Lichtlaufzeit 60 und somit letztlich der Abstand zu dem Objekt 16 ermittelt.

Figur 5 zeigt eine detaillierte Darstellung einer beispielhaften Ausführungsform des zweiten Auswertungskanal 56 zur Bestimmung des Signalverlaufs 62. Mit Signalverlauf 62 sind hier verschiedene Möglichkeiten bezeichnet, Charakteristika des Empfangssignals oder Empfangspulses zu erfassen, insbesondere eine Pulsbreite, eine Pulsform, ein Pegel oder einen RSSI. Der zweite Auswertungskanal 56 hat einen ähnlichen Aufbaue wie der erste Auswertungskanal 54, ermöglicht aber allein schon durch unabhängige Auslegung seiner Komponenten eine jeweilige gezielte Optimierung.

Das Empfangssignal oder ein Abschnitt davon wird einem zweiten Hochpassfilter 76 einer zweiten Grenzfrequenz zugeführt. Die Wirkungsweise ist prinzipiell ähnlich derjenigen des ersten Hochpassfilter 66 im ersten Auswertungskanal 54, jedoch können erste und zweite Grenzfrequenz unabhängig voneinander gewählt werden. Vorzugsweise ist die zweite Grenzfrequenz kleiner als die erste Grenzfrequenz. Das führt zu einer schwächeren Differenzierung und bewirkt eine Pulsverbreiterung bei stärker werdenden Empfangssignalen. Dies ist ein erwünschter Effekt, weil der Signalverlauf und insbesondere die Pulsbreite auf diese Weise genauer erfasst und unterschieden werden kann. Dabei kann die Pulsbreite schon als ein Maß für den Pegel oder RSSI herangezogen werden, denn der Pegel wirkt sich auf die Pulsbreite und insbesondere das Nachpulsen aus. Es können aber auch andere Maße gebildet werden, beispielsweise ein Integral beziehungsweise eine Summe über einen Histogrammabschnitt eines Empfangspulses. Im ersten Auswertungskanal 54 wäre eine Pulsverbreiterung ganz und gar unerwünscht, weil dadurch eine Schwerpunktermittlung einen höheren Messfehler erhält und eine Mehrechofähigkeit teilweise verlorengeht, denn in kurzem Abstand aufeinanderfolgende Pulse neigen noch stärker zum Ineinanderlaufen, wenn sie breiter werden.

Ein optionaler zweiter Verstärker 78 kann das Empfangssignal anheben oder alternativ abschwächen. Zur weiteren Signalformung ist ein zweites Bandpassfilter 80 vorgesehen, dessen Grenzfrequenzen anders als im ersten Bandpassfilter 70 nun eher auf das Herausarbeiten des Signalverlaufs als auf zeitliche Präzision optimiert sind.

In einem zweiten Komparator 82 wird das jeweilige gefilterte Empfangssignal analog der Funktion des ersten Komparators 72 mit einer zweiten Komparatorschwelle binarisiert oder digitalisiert. Insbesondere entsteht dadurch ein zweites Histogramm, aus dem der Signalverlauf 62 gewonnen wird. Eine zweite Schwellenanpassung 84 setzt eine passende statische zweite Komparatorschwelle. Eine dynamische Schwellenanpassung oder Schwellennachführung ist prinzipiell abweichend von der Darstellung auch vorstellbar.

Aus dem derart binarisierten oder digitalisierten Empfangssignal des zweiten Auswertungskanal 56 wird nun der Signalverlauf 62 bestimmt. Das kann eine für sich interessante weitere Messgröße sein, die extern beispielsweise an der Sensorschnittstelle 52 zur Verfügung gestellt wird. Für eine solche Ausgabegröße kann auch schon eine Verarbeitung in dem Sensor 10 stattfinden. Beispielsweise wird eine Pegelinformation des Signalverlaufs 62 mit einer Reflektorschwelle verglichen und so erkannt, ob das angetastete Objekt 16 ein Reflektor ist oder nicht. Eine entsprechende Reflektorinformation kann insbesondere als binäres Flag ausgegeben werden. Stattdessen oder zusätzlich kann der Signalverlauf 62 für interne Korrekturen und Anpassungen verwendet werden. Als ein Beispiel wird eine Farb- oder Schwarzweißkorrektur anhand einer Pegelinformation vorgenommen, d.h. die Lichtlaufzeit je nach Pegel korrigiert. Die erforderlichen Korrekturwerte können mit einem Graukeil eingelernt und als Korrekturtabelle oder -funktion hinterlegt sein. Als ein weiteres Beispiel erfolgt die Bestimmung des Empfangszeitpunkts aus dem Empfangssignal des ersten Auswertungskanals 54 anhand der Flanke oder des Schwerpunkts. Bei geringem Pegel ist das Empfangssignal eher rauschdominiert, womit eine Schwerpunktbestimmung besser umgehen kann. Bei höherem Pegel erhebt sich der Empfangspuls deutlich aus dem Rauschen und ermöglicht eine präzise zeitliche Lokalisierung anhand der Flanke. Die Umschaltung zwischen Schwerpunkt- und Flankenauswertung kann beispielsweise durch Vergleich mit einer Pegelschwelle erfolgen. Wie schon erwähnt, kann hier jeweils eine Pulsbreite stellvertretend für den Pegel verwendet werden.

Figur 6 zeigt eine detaillierte Darstellung einer beispielhaften Ausführungsform des optionalen dritten Auswertungskanals 58 zur Fremdlichtbestimmung. Das Empfangssignal wird einem Tiefpassfilter 86 einer dritten Grenzfrequenz zugeführt, die nun im Gegensatz zu den beiden anderen Auswertungskanälen 54, 56 eine obere und keine untere Grenzfrequenz ist. Damit werden die schnellen Signale der Pulse des Nutzlichts abgeschnitten, und nur ein Gleichlichtanteil und langsam veränderliche Anteile des Empfangssignals werden durchgelassen. Veränderungen des Umgebungslichts während des Rotierens eines Laserscanners werden in diesem Zusammenhang noch als langsam aufgefasst, denn das soll vorzugsweise durchaus berücksichtigt werden. Die dritte Grenzfrequenz liegt beispielsweise im Bereich einiger zehn Kilohertz bis hin zu einigen Megahertz. Das gefilterte Empfangssignal kann in einem optionalen dritten Verstärker 88 nachverstärkt und erforderlichenfalls mittels eines AD-Wandlers 90 digitalisiert werden.

Der auf diese Weise bestimmte Fremdlichtanteil 64 kann eine für sich interessante weitere Messgröße sein, die extern beispielsweise an der Sensorschnittstelle 52 zur Verfügung gestellt wird. Alternativ oder zusätzlich kann über den Fremdlichtanteil 64 eine Entfernungskorrektur für den ersten Auswertungskanal 54 erfolgen und/oder damit der Signalverlauf 62 korrigiert werden. Ferner kann der Fremdlichtanteil 64 für die dynamische Nachführung der ersten Komparatorschwelle mittels erster Schwellenanpassung 74 und/oder der zweiten Komparatorschwelle mittels zweiter Schwellenanpassung 84 verwendet werden. Alternativ ist für die Schwellennachführung ein vierter Verarbeitungskanal vorgesehen, der ein eigenes Tiefpassfilter einer vierten, für diesen Zweck optimierten Grenzfrequenz aufweist.

Der Sensor 10 verfügt vorzugsweise auch über eine nicht gezeigte Temperaturkompensation. Mittels eines Temperaturfühlers wird die Temperatur in dem Sensor 10 beziehungsweise des Lichtempfängers 18 gemessen. Die Temperaturabhängigkeiten des Lichtempfängers 18 werden vorab gemessen oder dessen Datenblatt entnommen, und dementsprechend können die Ausgabewerte und Korrekturwerte temperaturkompensiert werden.

## Patentansprüche

1. Entfernungsmessender optoelektronischer Sensor (10) zur Erfassung und Abstandsbestimmung eines Objekts (16) in einem Überwachungsbereich (14), der einen Lichtsender (12) zum Aussenden eines Sendesignals (34), einen Lichtempfänger (18) mit mindestens einem Lichtempfangselement (20) zum Erzeugen eines Empfangssignals, insbesondere einem Lichtempfangselement (20), das mit einer Vorspannung oberhalb einer Durchbruchspannung vorgespannt und somit in einem Geiger-Modus betrieben ist, sowie eine Steuer- und Auswerteeinheit (22) aufweist, die dafür ausgebildet ist, aus dem Empfangssignal eine Lichtlaufzeit (60) und damit den Abstand des Objekts (16) zu bestimmen, **dadurch gekennzeichnet**
**dass** die Steuer- und Auswertungseinheit (22) einen ersten Auswertungskanal (54) für das Empfangssignal zur Bestimmung der Lichtlaufzeit (60) und mindestens einen zweiten Auswertungskanal (56) für das Empfangssignal zur Bestimmung einer Signalverlaufsinformation (62) aufweist, wobei die Signalverlaufsinformation (62) eine Intensitäts- oder Forminformation des Empfangssignals umfasst.

2. Sensor (10) nach Anspruch 1,
wobei die Steuer- und Auswertungseinheit (22) dafür ausgebildet ist, die Lichtlaufzeit (60) mittels der Signalverlaufsinformation (62) zu korrigieren.

3. Sensor (10) nach Anspruch 1 oder 2,
wobei die Steuer- und Auswertungseinheit (22) dafür ausgebildet ist, für die Bestimmung der Lichtlaufzeit (60) in dem Empfangssignal die zeitliche Lage einer Flanke oder eines Maximums zu ermitteln, insbesondere einen Schwerpunkt des Maximums, und anhand der Signalverlaufsinformation (62) zu entscheiden, ob die Lichtlaufzeit (60) aus der Flanke oder dem Maximum bestimmt wird.

4. Sensor (10) nach einem der vorhergehenden Ansprüche,
wobei die Steuer- und Auswertungseinheit (22) dafür ausgebildet ist, anhand der Signalverlaufsinformation (62) festzustellen, ob das Objekt (16) ein Reflektor ist.

5. Sensor (10) nach einem der vorhergehenden Ansprüche,
wobei der erste Auswertungskanal (54) ein erstes Hochpassfilter (66) einer ersten Grenzfrequenz aufweist.

6. Sensor (10) nach einem der vorhergehenden Ansprüche,
wobei der erste Auswertungskanal (54) ein erstes Bandpassfilter (70) aufweist.

7. Sensor (10) nach einem der vorhergehenden Ansprüche,
wobei der erste Auswertungskanal (54) einen ersten Komparator (72) zur Digitalisierung des Empfangssignals aufweist, insbesondere mit einer anpassbaren (74) ersten Komparatorschwelle.

8. Sensor (10) nach einem der vorhergehenden Ansprüche,
wobei der zweite Auswertungskanal (56) ein zweites Hochpassfilter (76) einer zweiten Grenzfrequenz aufweist, wobei insbesondere die zweite Grenzfrequenz kleiner ist als die erste Grenzfrequenz.

9. Sensor (10) nach einem der vorhergehenden Ansprüche,
wobei der zweite Auswertungskanal (56) ein zweites Bandpassfilter (80) aufweist.

10. Sensor (10) nach einem der vorhergehenden Ansprüche,
wobei der zweite Auswertungskanal (56) einen zweiten Komparator (82) zur Digitalisierung des Empfangssignals aufweist, insbesondere mit einer anpassbaren (84) zweiten Komparatorschwelle.

11. Sensor (10) nach einem der vorhergehenden Ansprüche,
wobei die Steuer- und Auswertungseinheit (22) einen dritten Auswertungskanal (58) mit einem Tiefpassfilter (86) einer dritten Grenzfrequenz aufweist, wobei der dritte Auswertungskanal (58) dafür ausgebildet ist, einen Fremdlichtanteil (64) des Empfangssignals zu bestimmen.

12. Sensor (10) nach einem der vorhergehenden Ansprüche,
wobei die Steuer- und Auswertungseinheit (22) dafür ausgebildet ist, mittels des Fremdlichtanteils (64) die Signalverlaufsinformation (62) und/oder die Lichtlaufzeit (60) zu korrigieren.

13. Sensor (10) nach einem der vorhergehenden Ansprüche,
der als Laserscanner ausgebildet ist, insbesondere als Mehrlagenscanner, und der eine bewegliche Ablenkeinheit (24) aufweist, mit deren Hilfe die Sendesignale (34) periodisch durch den Überwachungsbereich (14) geführt werden.

14. Verfahren zur optischen Erfassung und Abstandsbestimmung eines Objekts (16) in einem Überwachungsbereich (14), wobei ein Sendesignal (34) ausgesandt, ein Lichtempfänger (18), der mindestens ein Lichtempfangselement (20) aufweist, das insbesondere mit einer Vorspannung oberhalb einer Durchbruchspannung vorgespannt und somit in einem Geiger-Modus betrieben wird, aus von dem Objekt (16) remittiertem Licht (38) ein Empfangssignal erzeugt, und aus dem Empfangssignal eine Lichtlaufzeit (60) und damit der Abstand des Objekts (16) bestimmt wird,
**dadurch gekennzeichnet**
**dass** in einem ersten Auswertungskanal (54) für das Empfangssignal die Lichtlaufzeit (60) und in mindestens einem zweiten Auswertungskanal (56) für das Empfangssignal eine Signalverlaufsinformation (62) bestimmt wird, wobei die Signalverlaufsinformation (62) eine Intensitäts- oder Forminformation des Empfangssignals umfasst.
